(19) Europäisches Patentamt
European Patent Office
Office européen des brevets

(11) **EP 4 773 404 A1**

(12) **EUROPEAN PATENT APPLICATION**
published in accordance with Art. 153(4) EPC

(43) Date of publication:
**08.07.2026 Bulletin 2026/28**

(21) Application number: **23959129.0**

(22) Date of filing: **21.11.2023**

(51) International Patent Classification (IPC):
*H01M 50/533* (2021.01)

(52) Cooperative Patent Classification (CPC):
H01M 50/533; Y02E 60/10

(86) International application number:
**PCT/CN2023/133016**

(87) International publication number:
**WO 2025/107154 (30.05.2025 Gazette 2025/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: Zhuhai CosMX Battery Co., Ltd.
Zhuhai, Guangdong 519180 (CN)

(72) Inventors:
• SHENG, Donghui
Zhuhai, Guangdong 519180 (CN)
• XIE, Jichun
Zhuhai, Guangdong 519180 (CN)

(74) Representative: Murgitroyd & Company
165-169 Scotland Street
Glasgow G5 8PL (GB)

(54) **ELECTRODE SHEET, BATTERY CELL, AND BATTERY**

(57) The present application provides an electrode plate, a cell, and a battery. The electrode plate includes a current collector and an electrode tab, where the current collector includes a support layer and a conductive layer. The conductive layer is located at least on a surface of a side of the support layer, and the electrode tab includes a main body portion and a connecting portion adjoining the main body portion, the connecting portion being connected to the conductive layer, and the main body portion extending in a direction away from the current collector. In an MD direction of the electrode plate, a length of the connecting portion of the electrode tab is greater than a length of the main body portion of the electrode tab. In this arrangement, part of the electrode tab is lengthened, so that the electrode tab is integrally divided into a main body portion and a connecting portion. The main body portion still maintains an original specification size, still meets the requirements of an original design, and does not affect an original basic function of the electrode tab, while the connecting portion with a relatively large length has a welding relationship with the conductive layer of the current collector. In this way, the current carrying capacity of the formed weld is increased, the temperature rise of charging and discharging can be lowered, and the problem of a temperature rise of the weld that is easily caused by insufficient current carrying capacity of the weld of the electrode tab of the composite current collector in the prior art can be solved.

FIG. 1

## Description

## TECHNICAL FIELD

The present application relates to the technical field of batteries, and in particular, to an electrode plate, a cell and a battery.

## TECHNICAL FIELD

In order to improve the nail penetration performance and impact resistance of a cell, the battery industry has begun to convert a current collector from a metal foil to a composite current collector which is formed by stacking and laminating a polymer material layer with a metal layer.

In view of the special nature of the composite current collector structure, an electrode tab on the composite current collector is generally formed by welding the electrode tab on the composite current collector. However, under the requirements of high-current charging and discharging, the current carrying capacity of a weld of the electrode tab and the composite current collector is insufficient, which easily leads to an increase in the temperature of the weld and brings potential safety hazards.

## SUMMARY

In view of this, the present application provides an electrode plate, a cell, and a battery to address the problem of a temperature rise of a weld that is easily caused by insufficient current carrying capacity of the weld of an electrode tab of a composite current collector in the prior art.

To achieve the above objective, the present application provides the following technical solution:
an electrode plate, including:

> a current collector including a support layer and a conductive layer, where the conductive layer is located at least on a surface of a side of the support layer; and
> an electrode tab including a main body portion and a connecting portion adjoining the main body portion, where the connecting portion is connected to the conductive layer, and the main body portion extends in a direction away from the current collector;
> where in an MD direction of the electrode plate, a length of the connecting portion of the electrode tab is greater than a length of the main body portion of the electrode tab.

Optionally, the conductive layer is provided on surfaces of two sides of the support layer, the electrode tab includes at least a first foil and a second foil respectively connected to the conductive layers on two sides of the support layer, in a TD direction of the electrode plate, a width of the first foil is greater than a width of the second foil, and at least a portion of an area of the main body portion is formed only by the first foil.

Optionally, the connecting portion is formed by welding the first foil, the current collector and the second foil; and
a junction of the main body portion and the connecting portion is formed by welding the first foil, and the current collector and the second foil, and/or formed by welding the first foil and the second foil.

Optionally, a plurality of the electrode tabs are provided, and the plurality of the electrode tabs include type-I electrode tabs and type-II electrode tabs, a plurality of the type-I electrode tabs and a plurality of the type-II electrode tabs are alternately distributed along the MD direction of the electrode plate, and in the MD direction of the electrode plate, the main body portion of each of the type-I electrode tabs has a length of S1, the main body portion of each of the type-II electrode tabs has a length of S2, the connecting portion of the type-I electrode tab has a length of S3, and the connecting portion of the type-II electrode tab has a length of S4;

> where S2 > S1;
> or S2 = S1, and S4 > S3.

Optionally, in a TD direction of the electrode plate, a surface of the conductive layer is provided with a coating portion, a ceramic portion and a bare current collector region in sequence, the connecting portion of the electrode tab covers a portion of the ceramic portion, and the connecting portion of the electrode tab is connected to the conductive layer in the bare current collector region.

Optionally, the conductive layer is provided on surfaces of two side of the support layer, and the electrode tab includes a first foil and a second foil;

> where on the current collector, the first foil and the second foil are respectively welded to the conductive layers on the surfaces of the two sides of the support layer, and the first foil, the current collector and the second foil form a first welding zone; and
> beyond the current collector, the first foil and the second foil are at least partially welded to form a second welding zone.

Optionally, at least a surface of the first welding zone is coated with an insulation layer, and the first welding zone is disposed adjacent to the second welding zone.

Optionally, the electrode tab is welded to the current collector, and a welding area is formed on the electrode tab; and in a TD direction of the electrode plate, the welding area of the type-I electrode tab has a width of W1, and the welding area of the type-II electrode tab has a width of W2;

where W1 satisfies 1 mm $\leq$ W1 $\leq$ 10 mm;
and/or W1 and W2 satisfy 0.5 $\leq$ W1/W2 $\leq$ 1.5.

Optionally, S1 satisfies 4 mm $\leq$ S1 $\leq$ 50 mm;

and/or S2 satisfies 4 mm $\leq$ S2 $\leq$ 50 mm;
and/or S1 and S2 satisfy 0.5 $\leq$ S1/S2 $\leq$ 1.

Optionally, S3 satisfies 6 mm $\leq$ S3 $\leq$ 200 mm;
and/or S4 satisfies 6 mm $\leq$ S4 $\leq$ 300 mm.

Optionally, in the MD direction of the electrode plate, a spacing distance between the type-I electrode tab and the type-II electrode tab is L1, where L1 satisfies 3 mm $\leq$ L1 $\leq$ 100 mm.

Optionally, in the TD direction of the electrode plate, the connecting portion of the type-I electrode tab has a height of H1 and the connecting portion of the type-II electrode tab has a height of H2;

where H1 and W1 satisfy 0.05 $\leq$ H1/W1 $\leq$ 0.95;
and/or H2 and W2 satisfy 0.05 $\leq$ H2/W2 $\leq$ 0.95.

Optionally, H1 and W1 satisfy 0.3 $\leq$ H1/W1 $\leq$ 0.6;
and/or H2 and W2 satisfy 0.3 $\leq$ H2/W2 $\leq$ 0.6.

Optionally, in the TD direction of the electrode plate, the ceramic portion has a width of Wt, and the portion of the ceramic portion that is covered by the connecting portion of the electrode tab has a width of Wf,

where Wt satisfies 1 mm $\leq$ Wt $\leq$ 10 mm;
and/or Wf satisfies 0 < Wf $\leq$ 5 mm;
and/or Wt and Wf satisfy 0.1 $\leq$ Wf/Wt $\leq$ 0.9.

Optionally, in the TD direction of the electrode plate, the first welding zone has a width of d1, the second welding zone has a width of d2, and the welding area formed by the first welding zone and the second welding zone has a width of d;

where d1 satisfies 0.5 mm $\leq$ d1 $\leq$ 20 mm;
and/or d2 satisfies 0.2 mm $\leq$ d2 $\leq$ 10 mm;
and/or d satisfies 2 mm $\leq$ d $\leq$ 50 mm;
and/or d2 and d satisfy 0.1 $\leq$ d2/d $\leq$ 0.7.

Optionally, the first welding zone and the second welding zone form the welding area; and in the TD direction of the electrode plate, a distance between an outer edge of the connecting portion of the electrode tab and an inner edge of the welding area is D1, and a distance between the outer edge of the connecting portion of the electrode tab and an outer edge of the welding area is D2;

where D1 satisfies 0.5 mm $\leq$ D1 $\leq$ 20 mm;
and/or 0.5 mm $\leq$ D2 $\leq$ 20 mm;
and/or D1 and D2 satisfy 0.1 $\leq$ D1/D2 $\leq$ 0.7.

Optionally, a joint of the connecting portion of the electrode tab and the current collector is an arc with a radius of R1, a joint of the main body portion of the electrode tab and the connecting portion is an arc with a radius of R2, and an outer edge corner of the connecting portion of the electrode tab is an arc with a radius of R3;

where R1 satisfies 0.5 mm $\leq$ R1 $\leq$ 10 mm;
and/or R2 satisfies 0.5 mm $\leq$ R2 $\leq$ 10 mm;
and/or R3 satisfies 0.2 mm $\leq$ R3 $\leq$ 5 mm.

Optionally, in the TD direction of the electrode plate, the current collector has a width of D3, and the connecting portion of the electrode tab has a height of D4, where D3 and D4 satisfy 0.1 $\leq$ D4/D3 $\leq$ 0.5.

Optionally, the current collector has a thickness of a, the first foil has a thickness of b1, the second foil has a thickness of b2, the first welding zone has a thickness of c1, the second welding zone has a thickness of c2, the first welding zone has an area of C1, and the second welding zone has an area of C2;

where a, b1, b2 and c1 satisfy c1 $\geq$ (a + b1 + b2) * 110%;
and/or b1, b2 and c2 satisfy c2 $\geq$ (b1 + b2) * 110%;
and/or c1, c2, C1 and C2 satisfy c1 * C1 > c2 * C2.

Further provided is a cell, including a first electrode plate, a separator and a second electrode plate that are stacked and wound, where the first electrode plate and the second electrode plate have opposite polarities, the first electrode plate is the electrode plate of any one of the above embodiments, the current collector of the first electrode plate is a first current collector, the electrode tab of the first electrode plate is a first electrode tab, and the second electrode plate includes a second current collector and a second electrode tab.

Optionally, the number of the first electrode tabs is n and the number of the second electrode tabs is m; where n and m satisfy:

$$n > m;$$

and/or 2 * m - 1 $\leq$ n $\leq$ 2 * m + 1.

Optionally, the first electrode tabs include type-I electrode tabs and type-II electrode tabs, a spacing distance between the adjacent type-I electrode tab and type-II electrode tab in the MD direction of the first electrode plate is L1, and in the MD direction of the second electrode plate, the second electrode tab has a length of L2, where L1 and L2 satisfy 1.2 * L2 < L1.

Optionally, an edge of the first current collector is located within an edge of the separator, and the separator completely covers the welding area of the first electrode tab.

Optionally, in a winding direction of the cell, the cell has a width of A and a thickness of B, the connecting portion of the type-I electrode tab has a length of S3, and the connecting portion of the type-II electrode tab has a length of S4;

where S3 satisfies 5% * (A + B) ≤ S3 ≤ 60% * (A + B); and/or S4 satisfies 50% * (A + B) ≤ S4 ≤ 90% * (A + B).

Further provided is a battery, including a plurality of cells of any of the above embodiments, and between two adjacent ones of the cells, all the first electrode tabs of each of the cells being pressed onto a first interconnection tab, and all the second electrode tabs of each of the cells being pressed onto a second interconnection tab;

where weld joints are respectively formed between the first electrode tab and the first interconnection tab and between the second electrode tab and the second interconnection tab by welding.

Optionally, the weld joint is located completely within the edge of the first electrode tab or the second electrode tab, and a distance between the edge of the weld joint and the outer edge of either side of the first electrode tab or the second electrode tab is greater than or equal to 0.5 mm and less than or equal to 5 mm.

Optionally, the first electrode tab and the second electrode tab are attached with an adhesive tape, and the adhesive tape completely covers all of the weld joints.

The electrode plate provided by the present application includes a current collector and an electrode tab, where the current collector includes a support layer and a conductive layer located at least on a side surface of the support layer, and the electrode tab includes a main body portion and a connecting portion adjoining the main body portion, the connecting portion being connected to the conductive layer. In an MD direction of the electrode plate, a length of the connecting portion of the electrode tab is larger than a length of the main body portion of the electrode tab, and the main body portion extends in a direction away from the current collector. In this arrangement, the electrode tab is of a special-shaped design, and on the basis of the conventional electrode tab, part of the electrode tab is lengthened, so that the electrode tab is integrally divided into a main body portion and a connecting portion. The main body portion still maintains an original specification size, still meets the requirements of an original design, and does not affect an original basic function of the electrode tab, while the connecting portion with a relatively large length has a welding relationship with the conductive layer of the current collector. In this way, the current carrying capacity of the formed weld is increased, the temperature rise of charging and discharging can be lowered, and the problem of a temperature rise of the weld that is easily caused by insufficient current carrying capacity of the weld of the electrode tab of the composite current collector in the prior art can be solved.

**BRIEF DESCRIPTION OF THE DRAWINGS**

To describe technical solutions in embodiments of the present application or in the prior art more clearly, the following briefly describes the drawings needed for describing the embodiments or the prior art. It is clear that the drawings in the following descriptions are merely part of embodiments of the present application, and a person of ordinary skill in the art may still derive other drawings from the provided drawings without creative efforts.

FIG. 1 is a schematic structural diagram of an electrode tab according to an embodiment of the present application;

FIG. 2 is a schematic structural diagram of an electrode plate according to an embodiment of the present application;

FIG. 3 is a schematic diagram of parameter labeling of a type-I electrode tab and a type-II electrode tab according to an embodiment of the present application;

FIG. 4 is a schematic structural diagram of the electrode tab prior to welding to a current collector according to an embodiment of the present application;

FIG. 5 is a schematic structural diagram of the electrode tab after welding to the current collector according to an embodiment of the present application;

FIG. 6 is a schematic diagram of parameter labeling of a weld joint area of the electrode tab according to an embodiment of the present application;

FIG. 7 is a schematic diagram of partial positions of a ceramic portion and the electrode tab according to an embodiment of the present application;

FIG. 8 is a schematic diagram of parameter labeling of the electrode tab and the current collector according to an embodiment of the present application;

FIG. 9 is a partial schematic diagram of a joint of the electrode tab and the current collector according to an embodiment of the present application;

FIG. 10 is a schematic cross-sectional view of a cell according to an embodiment of the present application;

FIG. 11 is a schematic diagram of the relative position of a first electrode tab and a second electrode tab according to an embodiment of the present application;

FIG. 12 is a schematic diagram of the overall structure of the cell according to an embodiment of the present application; and

FIG. 13 is a schematic diagram of an electrical connection of two cells according to an embodiment of the present application.

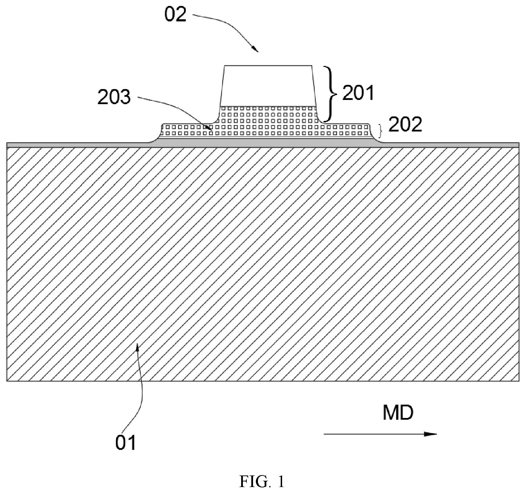

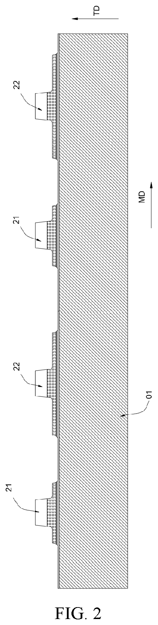

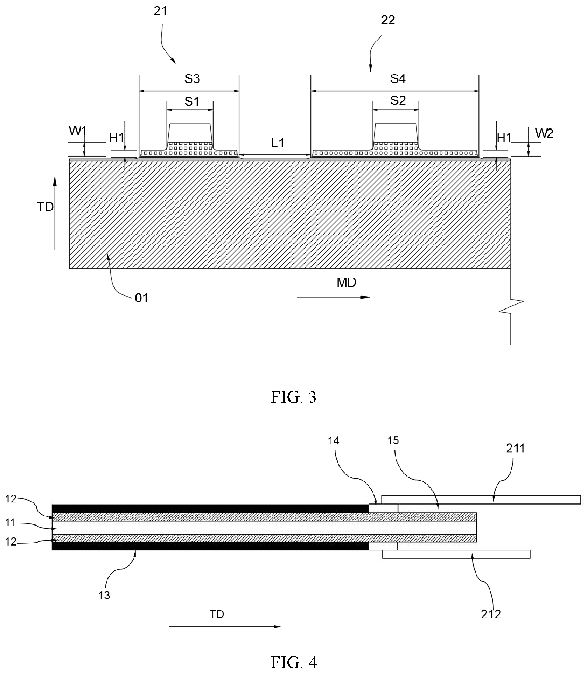

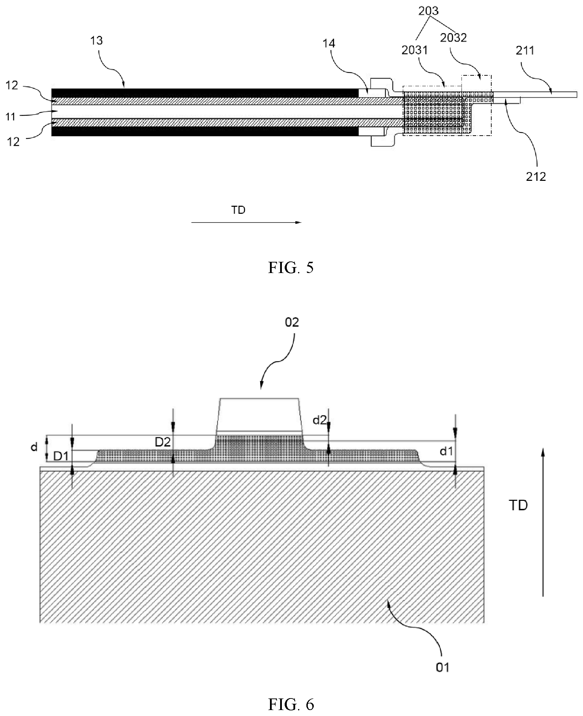

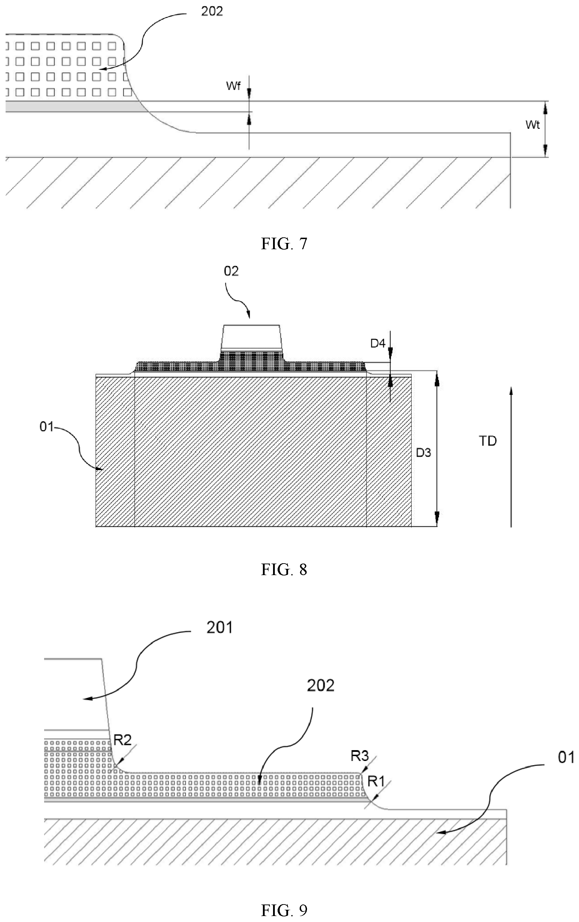

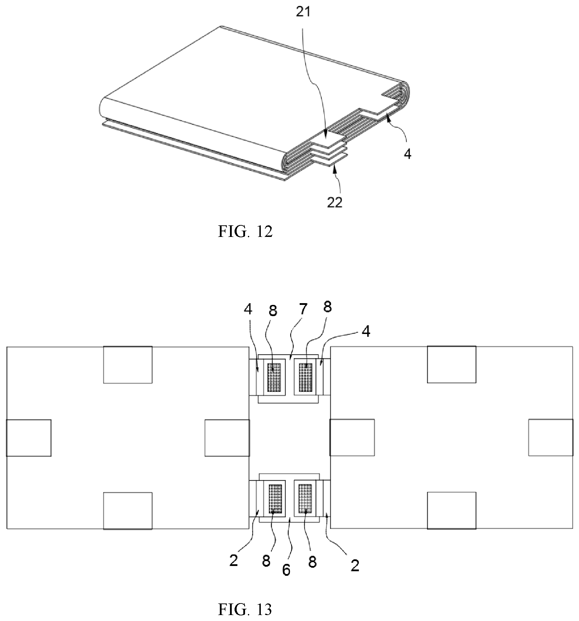

In FIGS. 1-13:

01. current collector; 02. electrode tab;
11. support layer; 12. conductive layer; 13. coating portion; 14. ceramic portion; 15. bare current collector region;

21. type-I electrode tab; 22. type-II electrode tab; 201. main body portion; 202. connecting portion; 203. welding area;

211. first foil; 212. second foil;

2031. first welding zone; 2032. second welding zone; 1. first current collector; 2. first electrode tab; 3. second current collector; 4. second electrode tab; 5. separator; 6. first interconnection tab; 7. second interconnection tab; 8. weld joint.

## DETAILED DESCRIPTION OF THE EMBODIMENTS

Technical solutions in embodiments of the present application are clearly and completely described below with reference to the drawings in the embodiments of the present application. Apparently, the embodiments described are merely part rather than all of the embodiments of the present application. All other embodiments obtained by a person of ordinary skill in the art based on the embodiments of the present application without creative efforts shall fall within the scope of protection of the present application.

As shown in FIGS. 1-9, an embodiment of the present application provides an electrode plate, which may be a positive electrode plate or a negative electrode plate and includes a current collector 01 and an electrode tab 02, where the current collector 01 is a composite current collector and includes a support layer 11 and a conductive layer 12, the conductive layer 12 being located at least on a side surface of the support layer 11; and the electrode tab 02 includes a main body portion 201 and a connecting portion 202 adjoining the main body portion 201, the main body portion 201 extending away from the current collector 01, the main body portion 201 and the connecting portion 202 being distributed in a TD direction of the electrode plate, and the connecting portion 202 and the conductive layer 12 being connected and electrically conducted by welding. In a flattened state of the electrode plate and in an MD direction of the electrode plate, a length of the connecting portion 202 of the electrode tab 02 is larger than a length of the main body portion 201 of the electrode tab 02. It should be noted that the electrode tab 02 is not in a regular rectangular shape, and tends to be trapezoidal, and the length refers to a length at the longest point in the MD direction. Similarly, a width is described as the width at the widest point in the TD direction, given that shape irregularities may exist in some areas.

In this arrangement, the electrode tab 02 is of a special-shaped design, and on the basis of the conventional electrode tab 02, part of the electrode tab 02 is lengthened, so that the electrode tab 02 is integrally divided into a main body portion 201 and a connecting portion 202. The main body portion 201 still maintains an original specification size, still meets the requirements of an original design, and does not affect an original basic function of the electrode tab 02, while the connecting portion 202 with a relatively large length has a welding relationship with the conductive layer 12 of the current collector 01. In this way, the current carrying capacity of the formed weld is increased, the temperature rise of charging and discharging can be lowered, and the problem of a temperature rise of the weld that is easily caused by insufficient current carrying capacity of the weld of the electrode tab 02 of the composite current collector in the prior art can be solved.

Illustratively, a conductive layer 12 is provided on each of two sides of the support layer 11, the conductive layer 12 being a metal foil such as a copper foil or an aluminum foil. In general, the surface of the conductive layer 12 is coated with an active material layer.

It should be noted that in the present application, the MD direction of the electrode plate in the flattened state is the direction of a larger dimension, that is, the length direction of the electrode plate; and the TD direction of the electrode plate is the direction of a smaller dimension, that is, the width direction of the electrode plate.

In another embodiment, the conductive layer 12 is provided on each of two side surfaces of the support layer 11, a single one of the electrode tabs 02 includes at least a first foil 211 and a second foil 212 respectively connected to the conductive layers 12 on both sides by welding, and in the TD direction of the electrode plate, a width of the first foil 211 is larger than a width of the second foil 212, that is, the single electrode tab 02 is formed by a combination of a wide foil and a narrow foil of different sizes, and at least part of an area of the main body portion 201 is formed only by the first foil 211.

This arrangement requires two foils to be combined to form a single electrode tab due to the structural specificity of the composite current collector. In the electrode tab 02 provided by the present application, since the main body portion 201 at an end has an area of a single layer of foil, while the thickness of the end of the electrode tab 02 is reduced, in a subsequent process of welding the electrode tab 02 to an interconnection tab, also because each electrode tab 02 is welded by a single layer of foil, the risk of poor solder joints caused by an excessive number of foils due to the presence of the wide foil and the narrow foil being split is avoided, which greatly reduces the difficulty of welding the electrode tab 02 to the interconnection tab.

Further, the connecting portion 202 is formed by welding the first foil 211, the current collector 01 and the second foil 212. A junction of the main body portion 201 and the connecting portion 202 is formed by welding the first foil 211, the current collector 01 and the second foil 212, and/or formed by welding the first foil 211 and the second foil 212.

In this arrangement, the junction of the main body portion 201 and the connecting portion 202 is still formed by the welding of a wide foil and a narrow foil. On the one hand, it is possible to improve the energy density, on the other hand, it is possible to avoid a direct dramatic change from a large thickness that the connecting portion 202 has to a small thickness that the main body portion 201 has, which means to avoid a direct dramatic change from a high-current overcurrent to a low-current overcurrent, thus solving the problem of reducing the current overcurrent capacity of a welding part and generating a large amount of heat at the junction of the two foils.

In another embodiment, a plurality of electrode tabs 02 are provided and include type-I electrode tabs 21 and type-II electrode tabs 22, the plurality of type-I electrode tabs 21 and the plurality of type-II electrode tabs 22 are alternately distributed along the MD direction of the electrode plate, and in the MD direction of the electrode plate, the main body portion 201 of each of the type-I electrode tabs 21 has a length of S1, the main body portion 201 of each of the type-II electrode tabs 22 has a length of S2, the connecting portion 202 of the type-I electrode tab 21 has a length of S3, and the connecting portion 202 of the type-II electrode tab 22 has a length of S4; where S2 > S1, i.e., the length of the main body portion 201 of the type-II electrode tab 22 is larger than the length of the main body portion 201 of the type-I electrode tab 21, and the length of the connecting portion 202 of the type-II electrode tab 22 is certainly larger than the length of the connecting portion 202 of the type-I electrode tab 21; or S2 = S1, and S4 > S3, i.e., when the length of the main body portion 201 of the type-II electrode tab 22 is the same as the length of the main body portion 201 of the type-I electrode tab 21, the length of the connecting portion 202 of the type-II electrode tab 22 is larger than the length of the connecting portion 202 of the type-I electrode tab 21.

In this arrangement, since the charge-discharge impedance of the composite current collector relative to a conventional metal current collector is large, usually a positive electrode being a composite current collector and a negative electrode being a metal current collector, or a positive electrode being a metal current collector and a negative electrode being a composite current collector is employed. As an example of the above-described electrode plate being the positive electrode plate, the current collector 01 of the negative electrode plate may be provided as a metal current collector, and the negative electrode tab 02 is integrally formed by cutting the metal current collector, so that the current carrying capacity of the negative electrode tab 02 is better than that of the positive electrode tab 02, and the number of negative electrode tabs 02 can be maintained as the original design. After the positive electrode plate and the negative electrode plate are wound into a cell, since the positive electrode tabs 02 are divided into two types, the negative electrode tabs 02 and the type-I electrode tabs 21 of the positive electrode tabs 02 are on the same side, the type-I electrode tab 21 is able to avoid the electrode tab 02 of the negative electrode plate, and the type-II electrode tab 22 serves as an additional structure and is formed on the other side of the non-negative electrode tab 02, without the need to consider the factor of avoidance. Therefore, the type-II electrode tab 22 can have a longer design of the connecting portion 202, enabling a further increase in the area of the weld, and further improving the current carrying capacity at a joint of the positive electrode tab 02 and the current collector 01.

In another embodiment, in the TD direction of the electrode plate, a surface of the conductive layer 12 is provided with a coating portion 13, a ceramic portion 14 and a bare current collector region 15 in sequence, where the coating portion 13 is an active coating, also known as a paste, the connecting portion 202 of the electrode tab 02 covers a part of the ceramic portion 14, and the connecting portion 202 of the electrode tab 02 is connected to the conductive layer 12 in the bare current collector region 15. It should be noted that the above content applies to both the type-I electrode tab 21 and the type-II electrode tab 22.

In this arrangement, firstly, since the connecting portion 202 of the electrode tab 02 covers part of the ceramic portion 14, while ensuring that the electrode tab 02 is not in contact with the coating portion 13, it is guaranteed that the electrode tab 02 covers the entire area of the bare current collector region 15, thereby effectively ensuring the conductivity of the electrode plate; secondly, since the connecting portion 202 of the electrode tab 02 is supported by the ceramic portion 14, the thickness of the electrode plate in this area is increased, so that the possibility of the electrode plate being folded over can be reduced; finally, after the electrode tab 02 is welded to the current collector 01, the whole also needs to be die-cut to form an electrode plate that meets the design requirements, and due to the arrangement of the ceramic portion 14, a die-cut cutting trajectory cuts the ceramic portion 14, which reduces burrs at an edge of the electrode plate and improves safety performance.

In general, in the composite current collector, a conductive layer 12 is provided on each of two sides of the support layer 11, and since the conductive layers 12 on both sides cannot be directly conducted, the single electrode tab 02 includes two layers of foils which are welded to the conductive layers 12 on both sides, respectively. On the one hand, the presence of the support layer 11 increases the difficulty of welding the electrode tab 02 to the conductive layer 12 in the bare current collector region 15, and also increases the difficulty of welding through the two layers of foils; and on the other hand, since the support layer 11 is a polymer material layer, its own welding performance is poor, causing that the welding strength between the electrode tab 02 and the current collector 01 is also relatively low after welding.

In order to solve the above problem, in another embodiment, a conductive layer 12 is provided on each of two side surfaces of the support layer 11, and a single electrode tab 02 includes a first foil 211 and a second foil 212, which are connected to the current collector 01 by ultrasonic roll welding. On the current collector 01, the first foil 211 and the second foil 212 are welded to the conductive layers 12 on both sides, respectively, and the first foil 211, the current collector 01 and the second foil 212 form a first welding zone 2031 having a three-layer structure. Beyond the current collector 01, the first foil 211 and the second foil 212 are at least partially welded and form a second welding zone 2032 having a two-layer structure. The first welding zone 2031 is connected to the second welding zone 2032. This arrangement has been verified to increase a current conduction path, which effectively reduces the welding internal resistance, increases the welding strength, and improves the electrical performance of the cell. It should be noted that the above content applies to both the type-I electrode tab 21 and the type-II electrode tab 22.

In another embodiment, the first welding zone 2031 is disposed adjacent to the second welding zone 2032.

In this arrangement, on the one hand, since the first welding zone 2031 is disposed adjacent to the second welding zone 2032, this prevents the risk of a poor foil strength of an unwelded part between the two welding zones caused by the discontinuity of the welding zones, which could otherwise lead to foil damage and a potential electrode tab failure. In addition, it is also possible to prevent the risk of breakage of the electrode tab that may occur between the two welding zones when the welding zones are arranged separately, leaving the middle portion without pressure welding while both sides are pressure welded. On the other hand, the first welding zone 2031 and the second welding zone 2032 are completed in the same process, which can reduce costs and increase production efficiency.

In another embodiment, at least a surface of the first welding zone 2031 is coated with an insulation layer, which is made of polyethylene glycol terephthalate (PET) or polypropylene (PP). This arrangement can alleviate the problem of surface protrusion of the first welding zone 2031, avoids piercing a separator 5 between the positive electrode plate and the negative electrode plate, and prevents a short circuit that may pose safety risks to the cell.

In another embodiment, the electrode tab 02 is welded to the current collector 01, and a welding area 203 is formed on the electrode tab 02, the welding area including the first welding zone 2031 and the second welding zone 2032, as previously described; and in the TD direction of the electrode plate, the welding area 203 of the type-I electrode tab 21 has a width of W1, and the welding area 203 of the type-II electrode tab 22 has a width of W2, where W1 satisfies $1 \text{ mm} \leq W1 \leq 10 \text{ mm}$; and/or W1 and W2 satisfy $0.5 \leq W1/W2 \leq 1.5$. It should be noted that, in W1/W2, "/" is used to denote the ratio relationship between W1 and W2, as is the case with other relationships in the present application.

In this arrangement, on the one hand, it is verified that the width of the welding area 203 of the electrode tab 02 cannot be less than 1 mm, and such a welding area 203 is too narrow and causes that the overcurrent capacity of the electrode tab 02 is below the design requirements; and the width of the welding area 203 of the electrode tab 02 cannot be larger than 10 mm, and such a welding area 203 is too wide and reduces the battery energy density. On the other hand, the width of the welding area 203 of the type-I electrode tab 21 cannot differ too much from the width of the welding area of the type-II electrode tab 22, and it is verified that when the above-mentioned ratio range is exceeded, the problem of uneven distribution of current may occur.

In another embodiment, the length S1 of the main body portion 201 of the type-I electrode tab 21 and the length S2 of the main body portion 201 of the type-II electrode tab 22 also have the following relationship, that is, S1 satisfies $4 \text{ mm} \leq S1 \leq 50 \text{ mm}$; and/or S2 satisfies $4 \text{ mm} \leq S2 \leq 50 \text{ mm}$; and/or S1 and S2 satisfy $0.5 \leq S1/S2 \leq 1$.

In this arrangement, on the one hand, it is verified that the length of the main body portion 201 of the electrode tab 02 cannot be less than 4 mm, and such an electrode tab 02 is too small and has insufficient overcurrent capacity; and the length of the main body portion 201 of the electrode tab 02 cannot be greater than 50 mm, and such an electrode tab 02 is too large and is easily folded upon passing through a guide roller of a cell winding apparatus. On the other hand, since in actual production, after the winding of the electrode plate is completed, it is inevitable that there is a slight misalignment between symmetrical centerlines of the respective electrode tabs 02. When the ratio of the length of the main body portion 201 of the type-I electrode tab 21 to the type-II electrode tab 22 is within the above range, an overlap area of each electrode tab 02 in a projection direction is guaranteed to meet the design requirements, even if misaligned.

In another embodiment, the length S3 of the connecting portion 202 of the type-I electrode tab 21 and the length S4 of the connecting portion 202 of the type-II electrode tab 22, under the premise of S3/S4 < 1, also has the following relationships: S3 satisfies $6 \text{ mm} \leq S3 \leq 200 \text{ mm}$; and/or S4 satisfies $6 \text{ mm} \leq S4 \leq 300 \text{ mm}$.

In this arrangement, in a cell of a common specification, if the type-I electrode tab 21 and the type-II electrode tab 22 meet the above conditions, while ensuring that the contact between the electrode tab 02 and the electrode plate of an opposite polarity is avoided, the area of the welding area 203 between the electrode tab 02 and the current collector 01 is increased to the maximum extent.

In another embodiment, in the MD direction of the electrode plate, a spacing distance between the type-I electrode tab 21 and the type-II electrode tab 22 is L1, where L1 satisfies $3 \text{ mm} \leq L1 \leq 100 \text{ mm}$. It has been verified that, in a cell of a common specification, a reasonable design solution of the cell can be achieved by selecting the spacing distance between the type-I electrode tab 21 and the type-II electrode tab 22 within this range for further design.

In another embodiment, in the TD direction of the electrode plate, the height of the connecting portion 202 of the type-I electrode tab 21 is H1 and the height of the connecting portion 202 of the type-II electrode tab 22 is H2; and with respect to the width W1 of the welding area 203 of the type-I electrode tab 21, and the width W2 of the welding area 203 of the type-II electrode tab 22, it also has the following relationships, that is, H1 and W1 satisfy $0.05 \leq H1/W1 \leq 0.95$; and/or H2 and W2 satisfy $0.05 \leq H2/W2 \leq 0.95$. It has been verified that, in a cell of a common specification, a reasonable design solution of the cell can be achieved by selecting the length-height ratio parameters of the type-I electrode tab 21 and the type-II electrode tab 22 within this range.

Moreover, it is preferred that H1 and W1 are designed to satisfy $0.3 \leq H1/W1 \leq 0.6$; and/or H2 and W2 satisfy $0.3 \leq H2/W2 \leq 0.6$. It has been verified that a design solution of a cell with better charging and discharging capabilities can be obtained.

With regard to the design of the side on which the electrode tab 02 of the electrode plate is located, which side is also commonly referred to as a head portion of the electrode plate in this technical field, in another embodiment, coating positions of the coating portion 13 and the ceramic portion 14 are certain, welding of the electrode tab 02 is carried out after the coating is completed, and in the TD direction of the electrode plate, the ceramic portion 14 has a width of Wt, and a part of the ceramic portion 14 that is covered by the electrode tab 02 has a width of Wf; where Wt satisfies $1\,mm \leq Wt \leq 10\,mm$; and/or Wf satisfies $0 < Wf \leq 5\,mm$; and Wt and Wf satisfy $0.1 \leq Wt/Wf \leq 0.9$.

In this arrangement, it is verified that when Wt/Wf < 0.1, the coverage of the ceramic portion 14 by the electrode tab 02 is too low, it is prone to an unstable overlap of the electrode tab 02 with the ceramic portion 14, and the strength support provided by the ceramic portion 14 to the electrode tab 02 does not meet the design requirements. When Wt/Wf > 0.9, the coverage of the ceramic portion 14 by the electrode tab 02 is too high and is closer to the coating portion 13, and on the basis of the existing situation of an unavoidable error in the welding process, there is a possibility that the electrode tab 02 will come into contact with the coating portion 13, which causes that the coating portion 13 at the head portion of the electrode plate cannot be used effectively and the battery energy density is reduced.

In another embodiment, in the TD direction of the electrode plate, the first welding zone 2031 has a width of d1, the second welding zone 2032 has a width of d2, and the welding area 203 formed by the first welding zone 2031 and the second welding zone 2032 has a width of d; where d1 satisfies $0.5\,mm \leq d1 \leq 20\,mm$; and/or d2 satisfies $0.2\,mm \leq d2 \leq 10\,mm$; and/or d satisfies $2\,mm \leq d \leq 50\,mm$; and/or d2 and d satisfy $0.1 \leq d2/d \leq 0.7$. In this arrangement, it has been verified that, in a cell of a common specification, in an electrode tab 02 designed by the parameters selected from the above-mentioned value range and ratio range, the current conduction path is increased, and at the same time, the welding internal resistance is effectively reduced, the welding strength is enhanced, and the electrical performance of the cell is improved; in an electrode tab 02 designed by the parameters selected below the above-mentioned value range and ratio range, the conductivity of the electrode tab 02 is not good; and in an electrode tab 02 designed by the parameters selected above the above-mentioned value range and ratio range, a relatively low energy density of the cell may be achieved.

In another embodiment, the first welding zone 2031 and the second welding zone 2032 form the welding area 203; in the TD direction of the electrode plate, a distance between an outer edge of the connecting portion 202 of the electrode tab 02 and an inner edge of the welding area 203 is D1, and a distance between the outer edge of the connecting portion 202 of the electrode tab 02 and an outer edge of the welding area 203 is D2; where D1 satisfies $0.5\,mm \leq D1 \leq 20\,mm$; and/or $0.5\,mm \leq D2 \leq 20\,mm$; and/or D1 and D2 satisfy $0.1 \leq D1/D2 \leq 0.7$. In this arrangement, it has been verified that, in a cell of a common specification, in an electrode tab 02 designed by the parameters selected from the above-mentioned value range and ratio range, it effectively improves the situation that the electrode tab 02 is easy to fold, and reduces safety risks to the cell caused by a short circuit. In an electrode tab 02 designed by the parameters selected below the above-mentioned value range and ratio range, the electrode tab 02 is easy to fold, and the conductivity of the electrode tab 02 is not good; and in an electrode tab 02 designed by the parameters selected above the above-mentioned value range and ratio range, a relatively low energy density of the cell may be achieved.

In another embodiment, a joint of the connecting portion 202 of the electrode tab 02 and the current collector 01 is an arc of a circle with a radius of R1, a joint of the main body portion 201 of the electrode tab 02 and the connecting portion 202 is an arc of a circle with a radius of R2, and an outer edge corner of the connecting portion 202 of the electrode tab 02 is an arc of a circle with a radius of R3; where R1 satisfies $0.5\,mm \leq R1 \leq 10\,mm$; and/or R2 satisfies $0.5\,mm \leq R2 \leq 10\,mm$; and/or R3 satisfies $0.2\,mm \leq R3 \leq 5\,mm$. In this arrangement, it has been verified that, in a cell of a common specification, in an electrode tab 02 designed by the parameters selected from the above-mentioned value range, it effectively improves the situation that the electrode tab 02 is easy to fold, and reduces safety risks to the cell caused by a short circuit. In an electrode tab 02 designed by the parameters selected beyond the above-mentioned value range, the problem of the electrode tab being easy to fold cannot be easily alleviated.

In another embodiment, in the TD direction of the electrode plate, the current collector 01 has a width of D3, and the connecting portion 202 of the electrode tab 02 has a height of D4, where D3 and D4 satisfy $0.1 \leq D4/D3 \leq 0.5$. In this arrangement, it has been verified that, in a cell of a common specification, the electrode tab 02 designed by the parameters selected from the above-mentioned ratio range may provide a sufficient area for the formation of the welding area 203, thereby increasing the current conduction path, effectively reducing the welding internal resistance, enhancing the welding strength, and improving the electrical performance of the cell. In an electrode tab 02 designed by the parameters selected below the above-mentioned ratio range, the conductivity of the electrode tab 02 is not good; and in an electrode tab 02 designed by the parameters selected above the above-mentioned ratio range, a relatively low energy density of the cell may be achieved.

In another embodiment, the current collector 01 has a thickness of a, the first foil 211 has a thickness of b1, the second foil 212 has a thickness of b2, the first welding zone 2031 has a thickness of c1, the second welding zone 2032 has a thickness of c2, the first welding zone 2031 has an area of C1, and the second welding zone 2032 has an area of C2; where a, b1, b2 and c1 satisfy $c1 \geq a + b1 + b2 * 110\%$; and/or b1, b2 and c2 satisfy $c2 \geq b1 + b2 * 110\%$; and/or c1, c2, C1 and C2 satisfy $c1 * C1 > c2 * C2$. In this arrangement, it has been verified that, in a cell of a common specification, in an electrode plate designed by the selected parameters meeting the above conditions, the charge-discharge current density of the first welding zone 2031 and the second welding zone 2032 can be significantly reduced, preventing localized overheating during charging and discharging. In an electrode plate designed by the selected parameters not meeting the above conditions, the thickness of the first welding zone 2031 and the second welding zone 2032 is too small, which cannot ensure that the problem of high charge-discharge current density in the first welding zone 2031 and the second welding zone 2032 can be alleviated.

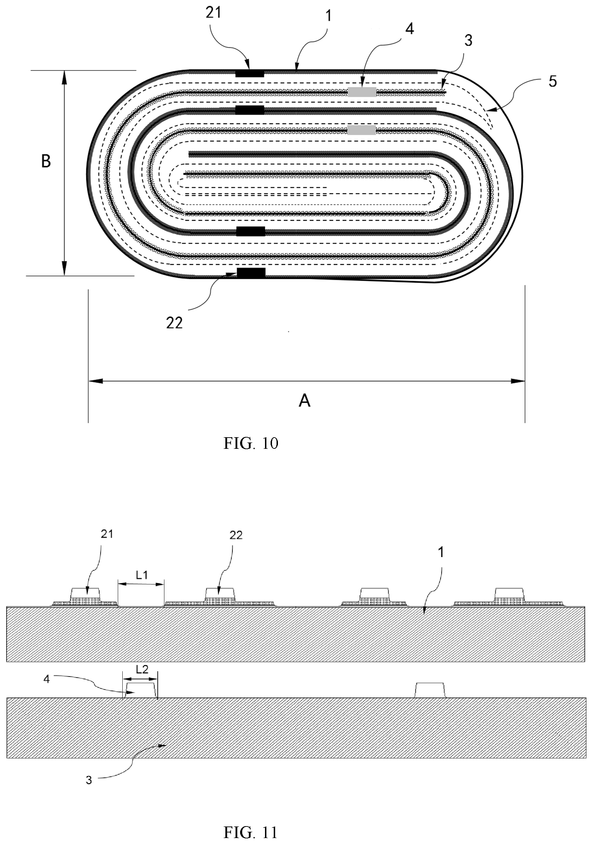

Based on the electrode plate described above, an embodiment of the present application further provides a cell, as shown in FIGS. 10-13, the cell including a first electrode plate, a separator 5 and a second electrode plate that are stacked and wound, where the first electrode plate and the second electrode plate have opposite polarities, the first electrode plate is the electrode plate described above, the current collector 01 of the first electrode plate is a first current collector 1, the electrode tab 02 of the first electrode plate is a first electrode tab 2, and the second electrode plate includes a second current collector 3 and a second electrode tab 4. Since the cell has the electrode plate described above, the beneficial effects the electrode plate brings to the cell have been described above and will not be repeated here. Illustratively, the first electrode plate is a positive electrode plate, the second electrode plate is a negative electrode plate, the second current collector 3 is a metal current collector, and the second electrode tab 4 is integrally formed from the metal current collector by cutting.

In another embodiment, the number of first electrode tabs 2 is n and the number of second electrode tabs 4 is m; where n and m satisfy: $n > m$; and/or $2 * m - 1 \leq n \leq 2 * m + 1$.

In this arrangement, in a winding direction of the cell, one first electrode tab 2 is provided every half turn on the first electrode plate and one second electrode tab 4 is provided every turn on the second electrode plate, and the number of the first electrode tabs 2 is increased in the first electrode plate, thereby compensating for the lack of charge and discharge performance of the first current collector 1 as a composite current collector. The second current collector 3 of the second electrode plate is a metal current collector. The second electrode tab 4 integrally formed by cutting provides a better current carrying capacity than the first electrode tab 2, and there is no need for too many second electrode tabs 4 to maintain the original quantity. After winding, all first electrode tabs 2 are opposite, and all second electrode tabs 4 are opposite.

In another embodiment, the first electrode tabs 2 include type-I electrode tabs 21 and type-II electrode tabs 22, the type-I electrode tabs 21 and the type-II electrode tabs 22 being arranged alternately in the winding direction of the cell, a spacing distance between the adjacent type-I electrode tab 21 and type-II electrode tab 22 in an MD direction of the first electrode plate is L1, and in an MD direction of the second electrode plate, the second electrode tab 4 has a length of L2, where L1 and L2 satisfy $1.2 * L2 < L1$.

In this arrangement, after stacking of the first electrode plate and the second electrode plate, in the MD direction of the electrode plate, the second electrode tab 4 is positioned between two adjacent first electrode tabs 2 and is designed as $1.2 * L2 < L1$ to prevent contact between the first electrode tab 2 and the second electrode tab 4 having opposite polarities.

In another embodiment, an edge of the first current collector 1 is located within an edge of the separator 5, and the separator 5 completely covers the welding area 203 of the first electrode tab 2. In general, in the TD direction of the electrode plate, the edge of the separator 5 extends beyond the edges of the first current collector 1 and the second current collector 3. In this arrangement, it ensures that the welding area 203 of the first electrode tab 2 and the first current collector 1 does not short-circuit due to contact with the second current collector 3 when all the first electrode tabs 2 are brought together and a slight bend occurs.

In another embodiment, in the winding direction of the cell, the cell has a width of A and a thickness of B, the connecting portion 202 of the type-I electrode tab 21 has a length of S3, and the connecting portion 202 of the type-II electrode tab 22 has a length of S4; where S3 satisfies $5\% * (A + B) \leq S3 \leq 60\% * A + B$; and/or S4 satisfies $50\% * (A + B) \leq S4 \leq 90\% * A + B$.

In this arrangement, when the type-I electrode tab 21 and the type-II electrode tab 22 meet the above-mentioned conditions, the area of the welding area 203 between the first electrode tab 2 and the first current collector 1 can be increased as far as possible by ensuring maximum use of a welding space. At the same time, it is also possible to ensure that the first electrode tab 2 does not interfere with a battery case after the cell is inserted into the case, preventing safety risks.

As can be seen, after the winding of the cell, all electrode tabs 02 need to be connected to external appliances by means of interconnection. In the actual production of batteries, one or more cells are generally used to form the batteries, so as to meet design requirements.

Based on the cell described above, an embodiment of the present application further provides a battery including a plurality of cells described above, and between two adjacent ones of the cells, all the first electrode tabs 2 of each cell are pressed onto a first interconnection tab 6, and all the second electrode tabs 4 of each cell are pressed onto a second interconnection tab 7. Weld joints 8 are formed between the first electrode tab 2 and the first interconnection tab 6 and between the second electrode tab 4 and the second interconnection tab 7 by welding. That is, four weld joints 8 are formed between the two cells. Since the battery has the cell described above, the beneficial effects the cell brings to the battery have been described above and will not be repeated here.

In another embodiment, the weld joint 8 is located completely within the edge of the first electrode tab 2 or the second electrode tab 4, and the distance between the edge of the weld joint 8 and the outer edge of either side of the first electrode tab 2 or the second electrode tab 4 is greater than or equal to 0.5 mm and less than or equal to 5 mm.

In this arrangement, a distance of at least 0.5 mm is left between the weld joint 8 and the electrode tab 02 to accommodate possible positional deviations from the welding process and to prevent welding to a position beyond the electrode tab 02; and the distance between the weld joint 8 and the electrode tab 02 shall not be greater than 5 mm, so that the electrode tab 02 and the interconnection tab have a sufficient area for welding.

In another embodiment, the first electrode tab 2 and the second electrode tab 4 are attached with an adhesive tape, the adhesive tape completely covers all the weld joints 8, and the adhesive tape partially or completely covers the first electrode tab 2 and the second electrode tab 4. In this arrangement, when the two cells are adjusted to be positioned side by side, the adhesive tape prevents an uneven surface of the weld joint 8 from damaging the structure of the cell.

The basic principles of the present application have been described above with reference to the specific embodiments, but it should be noted that the advantages, superiorities, effects and the like mentioned in the present application are merely examples rather than limitations, and these advantages, superiorities, effects and the like cannot be considered to be necessary for all the embodiments of the present application. Moreover, the specific details disclosed above are for illustration and easy understanding but not limitation, and the above details do not restrict the present application from being implemented using the above specific details.

The block diagrams of devices, apparatuses, equipment, and systems involved in the present application are illustrative examples and are not intended to require or imply that they are connected, arranged, and configured in the manner shown in the block diagrams. As will be appreciated by a person skilled in the art, these devices, apparatuses, equipment, and systems can be connected, arranged, and configured in any way. Words such as "include", "comprise", "have", etc., are openended words that mean "include but is not limited to" and can be used interchangeably therewith. The words "or" and "and" as used herein refer to the words "and/or" and can be used interchangeably therewith unless the context clearly indicates otherwise. The word "such as" as used here refers to the phrase "such as, but not limited to" and can be used interchangeably therewith.

It is also to be noted that in the apparatus, device, and method of the present application, each component or each step can be decomposed and/or recombined. These decompositions and/or recombinations are to be regarded as equivalent solutions of the present application.

The above description of the disclosed aspects is provided to enable any person skilled in the art to make or use the present application. Various modifications to these aspects are readily apparent to a person skilled in the art, and the general principles defined herein may be applied to other aspects without departing from the scope of the present application. Therefore, the present application is not intended to be limited to the aspects shown herein, but to be in the broadest scope consistent with the principles and novel features disclosed herein.

It is to be understood that the qualifiers "first", "second", "third", "fourth", "fifth", and "sixth" used in the description of the embodiments of the present application are used to explain the technical solutions more clearly and are not intended to limit the scope of protection of the present application.

The above description has been given for purposes of illustration and description. In addition, this description is not intended to limit the embodiments of the present application to the form disclosed herein. While various example aspects and embodiments have been discussed above, those skilled in the art will recognize certain variations, modifications, alterations, additions and sub-combinations thereof.

## Claims

1.   An electrode plate, comprising:

> a current collector (01) comprising a support layer (11) and a conductive layer (12), wherein the conductive layer (12) is located at least on a surface of a side of the support layer (11); and an electrode tab (02) comprising a main body portion (201) and a connecting portion (202) adjoining the main body portion (201), wherein the connecting portion (202) is connected to the conductive layer (12), and the main body portion (201) extends in a direction away from the current collector (01), wherein

in an MD direction of the electrode plate, a length of the connecting portion (202) of the electrode tab (02) is greater than a length of the main body portion (201) of the electrode tab (02).

2. The electrode plate according to claim 1, wherein the conductive layer (12) is provided on surfaces of two sides of the support layer (11), the electrode tab (02) comprises at least a first foil (211) and a second foil (212) respectively connected to the conductive layers (12) on two sides of the support layer (11), in a TD direction of the electrode plate, a width of the first foil (211) is greater than a width of the second foil (212), and at least a portion of an area of the main body portion (201) is formed only by the first foil (211).

3. The electrode plate according to claim 2, wherein the connecting portion (202) is formed by welding the first foil (211), the current collector (01) and the second foil (212); and

a junction of the main body portion (201) and the connecting portion (202) is formed by welding the first foil (211), and the current collector (01) and the second foil (212), and/or formed by welding the first foil (211) and the second foil (212).

4. The electrode plate according to any one of claims 1 to 3, wherein a plurality of the electrode tabs (02) are provided, and the plurality of the electrode tabs (02) comprise type-I electrode tabs (21) and type-II electrode tabs (22), a plurality of the type-I electrode tabs (21) and a plurality of the type-II electrode tabs (22) are alternately distributed along the MD direction of the electrode plate, and in the MD direction of the electrode plate, the main body portion (201) of each of the type-I electrode tabs (21) has a length of S1, the main body portion (201) of each of the type-II electrode tabs (22) has a length of S2, the connecting portion (202) of the type-I electrode tab (21) has a length of S3, and the connecting portion (202) of the type-II electrode tab (22) has a length of S4,

wherein S2 > S1; or
S2 = S1, and S4 > S3.

5. The electrode plate according to any one of claims 1 to 4, wherein in a TD direction of the electrode plate, a surface of the conductive layer (12) is provided with a coating portion (13), a ceramic portion (14) and a bare current collector region (15) in sequence, the connecting portion (202) of the electrode tab (02) covers a portion of the ceramic portion (14), and the connecting portion (202) of the electrode tab (02) is connected to the conductive layer (12) in the bare current collector region (15).

6. The electrode plate according to any one of claims 1 to 5, wherein the conductive layer (12) is provided on surfaces of two sides of the support layer (11), and the electrode tab (02) comprises a first foil (211) and a second foil (212), wherein

on the current collector (01), the first foil (211) and the second foil (212) are respectively welded to the conductive layers (12) on the surfaces of the two sides of the support layer (11), and the first foil (211), the current collector (01) and the second foil (212) form a first welding zone (2031); and
beyond the current collector (01), the first foil (211) and the second foil (212) are at least partially welded to form a second welding zone (2032).

7. The electrode plate according to claim 6, wherein at least a surface of the first welding zone (2031) is coated with an insulation layer, and the first welding zone (2031) is disposed adjacent to the second welding zone (2032).

8. The electrode plate according to any one of claims 4 to 7, wherein the electrode tab (02) is welded to the current collector (01), and a welding area (203) is formed on the electrode tab (02); and in a TD direction of the electrode plate, the welding area (203) of the type-I electrode tab (21) has a width of W1, and the welding area (203) of the type-II electrode tab (22) has a width of W2, wherein

W1 satisfies: 1 mm $\leq$ W1 $\leq$ 10 mm; and/or
W1 and W2 satisfy: 0.5 $\leq$ W1/W2 $\leq$ 1.5.

9. The electrode plate according to any one of claims 4 to 8, wherein S1 satisfies: 4 mm $\leq$ S1 $\leq$ 50 mm; and/or

S2 satisfies 4 mm $\leq$ S2 $\leq$ 50 mm; and/or
S1 and S2 satisfy 0.5 $\leq$ S1/S2 $\leq$ 1.

10. The electrode plate according to any one of claims 4 to 9, wherein S3 satisfies: 6 mm $\leq$ S3 $\leq$ 200 mm; and/or
S4 satisfies: 6 mm $\leq$ S4 $\leq$ 300 mm.

11. The electrode plate according to any one of claims 4 to 10, wherein in the MD direction of the electrode plate, a spacing distance between the type-I electrode tab (21) and the type-II electrode tab (22) is L1, wherein L1 satisfies: 3 mm ≤ L1 ≤ 100 mm.

12. The electrode plate according to any one of claims 8 to 11, wherein in the TD direction of the electrode plate, the connecting portion (202) of the type-I electrode tab (21) has a height of H1 and the connecting portion (202) of the type-II electrode tab (22) has a height of H2, wherein

 H1 and W1 satisfy: $0.05 \leq H1/W1 \leq 0.95$; and/or
 H2 and W2 satisfy: $0.05 \leq H2/W2 \leq 0.95$.

13. The electrode plate according to claim 12, wherein H1 and W1 satisfy: $0.3 \leq H1/W1 \leq 0.6$; and/or H2 and W2 satisfy $0.3 \leq H2/W2 \leq 0.6$.

14. The electrode plate according to any one of claims 5 to 13, wherein in the TD direction of the electrode plate, the ceramic portion (14) has a width of Wt, and the portion of the ceramic portion (14) that is covered by the connecting portion (202) of the electrode tab (02) has a width of Wf, wherein

 Wt satisfies: $1 \text{ mm} \leq Wt \leq 10 \text{ mm}$; and/or
 Wf satisfies: $0 < Wf \leq 5 \text{ mm}$; and/or
 Wt and Wf satisfy: $0.1 \leq Wf/Wt \leq 0.9$.

15. The electrode plate according to any one of claims 6 to 14, wherein in a TD direction of the electrode plate, the first welding zone (2031) has a width of d1, the second welding zone (2032) has a width of d2, and a welding area (203) formed by the first welding zone (2031) and the second welding zone (2032) has a width of d, wherein

 d1 satisfies: $0.5 \text{ mm} \leq d1 \leq 20 \text{ mm}$; and/or
 d2 satisfies: $0.2 \text{ mm} \leq d2 \leq 10 \text{ mm}$; and/or
 d satisfies: $2 \text{ mm} \leq d \leq 50 \text{ mm}$; and/or
 d2 and d satisfy: $0.1 \leq d2/d \leq 0.7$.

16. The electrode plate according to any one of claims 6 to 15, wherein the first welding zone (2031) and the second welding zone (2032) form a welding area (203); and in a TD direction of the electrode plate, a distance between an outer edge of the connecting portion (202) of the electrode tab (02) and an inner edge of the welding area (203) is D1, and a distance between the outer edge of the connecting portion (202) of the electrode tab (02) and an outer edge of the welding area (203) is D2, wherein

 D1 satisfies: $0.5 \text{ mm} \leq D1 \leq 20 \text{ mm}$; and/or
 D2 satisfies: $0.5 \text{ mm} \leq D2 \leq 20 \text{ mm}$; and/or
 D1 and D2 satisfy: $0.1 \leq D1/D2 \leq 0.7$.

17. The electrode plate according to any one of claims 1 to 16, wherein a joint of the connecting portion (202) of the electrode tab (02) and the current collector (01) is an arc with a radius of R1, a joint of the main body portion (201) of the electrode tab (02) and the connecting portion (202) is an arc with a radius of R2, and an outer edge corner of the connecting portion (202) of the electrode tab (02) is an arc with a radius of R3, wherein

 R1 satisfies: $0.5 \text{ mm} \leq R1 \leq 10 \text{ mm}$; and/or
 R2 satisfies: $0.5 \text{ mm} \leq R2 \leq 10 \text{ mm}$; and/or
 R3 satisfies $0.2 \text{ mm} \leq R3 \leq 5 \text{ mm}$.

18. The electrode plate according to any one of claims 1 to 17, wherein in a TD direction of the electrode plate, the current collector (01) has a width of D3, and the connecting portion (202) of the electrode tab (02) has a height of D4, wherein D3 and D4 satisfy: $0.1 \leq D4/D3 \leq 0.5$.

19. The electrode plate according to any one of claims 6 to 18, wherein the current collector (01) has a thickness of a, the first foil (211) has a thickness of b1, the second foil (212) has a thickness of b2, the first welding zone (2031) has a thickness of c1, the second welding zone (2032) has a thickness of c2, the first welding zone (2031) has an area of C1, and the second welding zone (2032) has an area of C2, wherein

 a, b1, b2 and c1 satisfy: $c1 \geq (a + b1 + b2) * 110\%$; and/or
 b1, b2 and c2 satisfy: $c2 \geq (b1 + b2) * 110\%$; and/or
 c1, c2, C1 and C2 satisfy: $c1 * C1 > c2 * C2$.

20. A cell, comprising a first electrode plate, a separator (5) and a second electrode plate that are stacked and wound, wherein the first electrode plate and the second electrode plate have opposite polarities, the first electrode plate is the electrode plate according to any one of claims 1 to 19, the current collector (01) of the first electrode plate is a first current collector (1), the electrode tab (02) of the first electrode plate is a first electrode tab (2), and the second electrode plate comprises a second current collector (3) and a second electrode tab (4).

21. The cell according to claim 20, wherein a quantity of the first electrode tabs (2) is n and a quantity of the second electrode tabs (4) is m, wherein n and m satisfy:

$$n > m;$$

and/or

$$2 * m - 1 \leq n \leq 2 * m + 1.$$

**22.** The cell according to claim 20 or claim 21, wherein the first electrode tabs (2) comprise type-I electrode tabs (21) and type-II electrode tabs (22), a spacing distance between the adjacent type-I electrode tab (21) and type-II electrode tab (22) in an MD direction of the first electrode plate is L1, and in an MD direction of the second electrode plate, the second electrode tab (4) has a length of L2, wherein L1 and L2 satisfy: $1.2 * L2 < L1$.

**23.** The cell according to any one of claims 20 to 22, wherein an edge of the first current collector (1) is located within an edge of the separator (5), and the separator (5) completely covers a welding area (203) of the first electrode tab (2).

**24.** The cell according to claim 22 or claim 23, wherein in a winding direction of the cell, the cell has a width of A and a thickness of B, the connecting portion (202) of the type-I electrode tab (21) has a length of S3, and the connecting portion (202) of the type-II electrode tab (22) has a length of S4, wherein

S3 satisfies: $5\% * (A + B) \le S3 \le 60\% * (A + B)$; and/or
S4 satisfies: $50\% * (A + B) \le S4 \le 90\% * (A + B)$.

**25.** A battery, comprising a plurality of the cells according to any one of claims 20 to 24, and between two adjacent ones of the cells, all the first electrode tabs (2) of each of the cells being pressed onto a first interconnection tab (6), and all the second electrode tabs (4) of each of the cells being pressed onto a second interconnection tab (7), wherein weld joints (8) are respectively formed between the first electrode tab (2) and the first interconnection tab (6) and between the second electrode tab (4) and the second interconnection tab (7) by welding.

**26.** The battery according to claim 25, wherein the weld joint (8) is located completely within an edge of the first electrode tab (2) or the second electrode tab (4), and a distance between an edge of the weld joint (8) and an outer edge of either side of the first electrode tab (2) or the second electrode tab (4) is greater than or equal to 0.5 mm and less than or equal to 5 mm.

**27.** The battery according to claim 25 or claim 26, wherein the first electrode tab (2) and the second electrode tab (4) are attached with an adhesive tape, and the adhesive tape completely covers all of the weld joints (8).

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

## INTERNATIONAL SEARCH REPORT

| International application No. |
| --- |
| **PCT/CN2023/133016** |

| A. | CLASSIFICATION OF SUBJECT MATTER |
| --- | --- |

H01M 50/533(2021.01)i

According to International Patent Classification (IPC) or to both national classification and IPC

| B. | FIELDS SEARCHED |
| --- | --- |

Minimum documentation searched (classification system followed by classification symbols)

IPC：H01M 50/533

Documentation searched other than minimum documentation to the extent that such documents are included in the fields searched

Electronic data base consulted during the international search (name of data base and, where practicable, search terms used)

VEN, CNTXT, ENTXT, IEEE, CNKI, 百度, BAIDU, 必应, BING: 极片, 极耳, 主体, 本体, 连接部, 延伸部, 集流体, 支撑层, 导电层, 箔片, 焊接, pole plate, pole ear, connection part, extension part, fluid collector, support layer, conductive layer, foil, welding

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 111180665 A (CONTEMPORARY AMPEREX TECHNOLOGY CO., LTD.) 19 May 2020 (2020-05-19) <br> description, paragraphs 99-143, and figures 1, 5, and 17A | 1-27 |
| Y | CN 115425372 A (JIANGSU CONTEMPORARY AMPEREX TECHNOLOGY LIMITED et al.) 02 December 2022 (2022-12-02) <br> description, paragraphs 22, 26, and 61-71, and figures 5 and 7 | 1-27 |
| A | CN 114094045 A (ZHUHAI COSMX BATTERY CO., LTD.) 25 February 2022 (2022-02-25) <br> entire document | 1-27 |
| A | CN 115566371 A (SUZHOU QINGTAO NEW ENERGY TECHNOLOGY CO., LTD.) 03 January 2023 (2023-01-03) <br> entire document | 1-27 |
| A | CN 217955981 U (ZHUHAI COSMX BATTERY CO., LTD.) 02 December 2022 (2022-12-02) <br> entire document | 1-27 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 August 2024** | **15 August 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/133016**

### C.    DOCUMENTS CONSIDERED TO BE RELEVANT

| Category* | Citation of document, with indication, where appropriate, of the relevant passages | Relevant to claim No. |
|---|---|---|
| A | CN 219371065 U (ZHONGCHUANG XINHANG TECHNOLOGY GROUP CO., LTD.) 18 July 2023 (2023-07-18)<br>entire document | 1-27 |

Form PCT/ISA/210 (second sheet) (July 2022)

International application No.

**PCT/CN2023/133016**

| Patent document cited in search report | | | Publication date (day/month/year) | Patent family member(s) | | | Publication date (day/month/year) |
|---|---|---|---|---|---|---|---|
| CN | 111180665 | A | 19 May 2020 | WO | 2020258754 | A1 | 30 December 2020 |
| | | | | EP | 3916845 | A1 | 01 December 2021 |
| | | | | EP | 3916845 | A4 | 23 March 2022 |
| | | | | EP | 3916845 | B1 | 30 November 2022 |
| | | | | US | 2022093932 | A1 | 24 March 2022 |
| CN | 115425372 | A | 02 December 2022 | WO | 2024093100 | A1 | 10 May 2024 |
| | | | | EP | 4391205 | A1 | 26 June 2024 |
| CN | 114094045 | A | 25 February 2022 | CN | 216288515 | U | 12 April 2022 |
| | | | | WO | 2023088434 | A1 | 25 May 2023 |
| CN | 115566371 | A | 03 January 2023 | None | | | |
| CN | 217955981 | U | 02 December 2022 | None | | | |
| CN | 219371065 | U | 18 July 2023 | None | | | |

Form PCT/ISA/210 (patent family annex) (July 2022)